# EUROPÄISCHE PATENTSCHRIFT

(11) **EP 2 699 448 B1**
(45) Veröffentlichungstag und Bekanntmachung des Hinweises auf die Patenterteilung: **19.11.2014**
(21) Anmeldenummer: 12715605.7
(22) Anmeldetag: 12.04.2012
(51) Int. Cl.: B60N 2/015, B60N 2/36

(54) **VERRIEGELUNGSEINRICHTUNG EINER UMKLAPPBAREN RÜCKENLEHNE EINES SITZES**
LOCKING DEVICE OF THE FOLDABLE BACKREST OF A SEAT
DISPOSITIF DE VERROUILLAGE D'UN UN DOSSIER RABATTABLE DE'UN SIEGE

(30) Priorität: 21.04.2011 DE 102011018658
(43) Veröffentlichungstag der Anmeldung: 26.02.2014
(73) Patentinhaber: Johnson Controls Components GmbH & Co. KG, 67657 Kaiserslautern (DE)
(72) Erfinder: TEUFEL, Ingo, 67806 Rockenhausen (DE); SCHUMANN, Kai, 66509 Rieschweiler-Mühlbach (DE)
(74) Vertreter: Wilhelm, Wolfgang
(86) Internationale Anmeldenummer: PCT/EP2012/001577
(87) Internationale Veröffentlichungsnummer: WO 2012/143102

(56) Entgegenhaltungen:
- DE-A1- 10 146 528
- DE-A1- 19 653 220
- DE-C1- 19 916 223

## Beschreibung

Die Erfindung bezieht sich auf eine Verriegelungseinrichtung einer umklappbaren Rückenlehne eines Sitzes, insbesondere eines Fondsitzes in einem Kraftfahrzeug, mit einem Verriegelungsgehäuse, in dem eine um eine Schwenkachse zwischen einer Verriegelungsstellung und einer Entriegelungsstellung schwenkbaren Handhabe angeordnet ist, durch die eine Sperrklinke zwischen einer Sperrstellung und einer Entsperrstellung mitnehmbar ist, mit einem Blockierelement, das durch ein abschließbares Schloss manuell zwischen einer die Handhabe in ihrer Verriegelungsstellung blockierenden Blockierstellung und einer die Handhabe freigebenden Freigabestellung bewegbar ist.

### Stand der Technik

Eine derartige Verriegelungseinrichtung dient dazu, eine umklappbare Rückenlehne in ihrer aufrechten Position zu sichern, damit kein ungewolltes Umklappen der Rückenlehne erfolgen kann. Das Umklappen der Rückenlehne ermöglicht es aber einen vergrößerten Laderaum zu schaffen.

Die Abschließbarkeit der in ihrer aufrechten Position befindlichen Rückenlehne hat z.B. bei einem Fondsitz den Zweck, ein Eindringen vom Fahrgastraum in den Kofferraum zu verhindern. Damit bedeutet die Abschließbarkeit eine Diebstahlsicherung.

Dazu ist es bekannt das Blockierelement als linear verschiebbaren Blockierriegel auszubilden, durch den eine Schwenkbarkeit der Handhabe in deren Verriegelungsstellung blockierbar ist.

Diese Ausbildung erfordert einen großen Bauraum.

Aus der US 4,813,722 ist eine abschließbare Verriegelungseinrichtung bekannt, bei welcher im abgeschlossenen Zustand ein Verschwenken der Handhabe nicht möglich ist.

Aus der DE 101 46 528 A1 ist eine gattungsgemässe, abschließbare Verriegelungseinrichtung bekannt, bei welcher im abgeschlossenen Zustand ein Verschwenken der Handhabe möglich ist, ohne dass dabei eine Mitnahme der Sperrklinke erfolgt. Eine ähnliche Verriegelungsvorrichtung ist auch in der DE 199 16 223 C1 offenbart.

### Aufgabe

Aufgabe der Erfindung ist es daher, eine Verriegelungseinrichtung der eingangs genannten Art zu schaffen, die einen geringen Bauraum erfordert und nur wenige, einfach aufgebaute Bauteile benötigt.

### Lösung

Diese Aufgabe wird in Verbindung mit den Merkmalen des Oberbegriffs des Anspruchs 1 erfindungsgemäß dadurch gelöst, dass das Blockierelement ein in dem Verriegelungsgehäuse um eine Riegelachse zwischen der Blockierstellung und der Freigabestellung schwenkbar gelagerter Schließriegel ist, der eine Freigabeausnehmung und eine Blockierausnehmung aufweist, und dass die Handhabe einen Blockierzapfen aufweist, der in der Freigabestellung des Schließriegels in die Freigabeausnehmung ragt und durch ein Verschwenken der Handhabe zwischen der Verriegelungsstellung und der Entriegelungsstellung in der Freigabeausnehmung frei bewegbar ist, und der in der Blockierstellung des Schließriegels sowie der Verriegelungsstellung der Handhabe in die Blockierausnehmung ragt und gegen Verschwenken in die Entriegelungsstellung blockiert ist.

Durch die Schwenkbarkeit des Schließriegels wird nur ein geringer Bauraum benötigt, in dem sich der Schließriegel bewegt.

Die Ausbildung der Freigabeausnehmung und der Blockierausnehmung in dem Schließriegel sowie der Blockierzapfen der Handhabe führen zu einer einfachen Ausbildung der miteinander wirkenden Teile von Schließriegel und Handhabe.

Zu einer kompakten Ausbildung führt es, wenn sich die Riegelachse quer zur Schwenkachse der Handhabe erstreckt.

Der gegen axiales Verschieben gesicherte Schließriegel kann eine sich parallel zur Riegelachse erstreckende, die Freigabeausnehmung bildende Freigabenut aufweisen, die in der Freigabestellung des Schließriegels der Handhabe zugewandt ist und in die der Blockierzapfen ragt, wobei ein Ende der Freigabenut in eine zumindest teilweise radial umlaufende, die Blockierausnehmung bildende Blockiernut mündet, deren eine Seitenwand einen Blockieranschlag bildet, an den der Blockierzapfen eine Bewegung der Handhabe aus der Verriegelungsstellung in die Entriegelungsstellung blockierend anschlagbar ist.

Weiterhin ist dadurch bei betätigter Handhabe der Schließriegel nicht abschließbar.

Durch einen kurzen Schwenkweg des Schließriegels wird dabei der Blockierzapfen relativ von der Freigabenut in die Blockiernut und umgekehrt bewegt.

Die Axialsicherung des Schließriegels verhindert dabei ein Verschieben des Schließriegels, wenn versucht wird bei in der Blockiernut befindlichem Blockierzapfen die Handhabe aus der Verriegelungsstellung in die Entriegelungsstellung zu bewegen.

Dabei werden selbst hohe Kräfte auf einfache Weise sicher abgestützt, wenn der Schließriegel einen radial hervorstehenden Sicherungsansatz aufweist, der in der Blockierstellung des Schließriegels an zumindest einem gehäusefesten Sicherungsanschlag axial zur Riegelachse eine von dem durch die Handhabe in Entriegelungsstellung beaufschlagten Blockierzapfen auf den Schließriegel einwirkende Kraft abstützend in Anlage ist.

Gleichzeitig ergibt sich eine einfache Montierbarkeit des Schließriegels durch Steckmontage.

Sowohl zur Abschließbarkeit der Verriegelungseinrichtung als auch zum Verschwenken des Schließriegels kann der Schließriegel durch einen schlüsselbetätigbaren Schließzylinder zwischen der Freigabestellung und der Blockierstellung schwenkbar antreibbar sein.

Ist der Schließzylinder gegen axiale Verschiebbarkeit gesichert und um die Riegelachse im Verriegelungsgehäuse oder in einer Schließzylinderführung schwenkbar gelagert, und greift der Schließzylinder mit einem zur Riegelachse parallelen und zum Schließriegel hin hervorstehenden Schließzapfen axial in eine entsprechende Schließausnehmung des Schließriegels ein, so führt die koaxiale Anordnung von Schließzylinder und Schließriegel zu einem geringen Bauraumbedarf. Außerdem erfolgt allein durch Montage des Schließzylinders automatisch und damit montagefreundlich eine Kupplung mit dem Schließriegel.

Ist der Schließriegel durch eine vorgespannte Feder in seine Freigabestellung federbeaufschlagt, so wird der Schließzylinder nach einem Einführen in seine Führung im Verriegelungsgehäuse zwangsweise in seiner Freigabestellung gehalten.

Dabei führt es zu einem raumsparenden integrierten Aufbau, wenn die Feder eine Wendelfeder ist, deren eines Ende an dem Schließriegel und deren zweites Ende an dem Verriegelungsgehäuse abgestützt ist, wobei die Feder in einer koaxial zylindrischen Federkammer des Schließriegels angeordnet ist, aus der das zweite Ende der Wendelfeder durch einen teilumlaufenden Schlitz radial herausragt.

Soll die Verriegelungseinrichtung ohne Schließzylinder transportierbar sein und dabei der Schließriegel unverdrehbar in seiner korrekten Einbauposition gehalten werden, kann der Schließriegel eine Federraste aufweisen, die aus einer radial von dem Schließriegel hervorstehenden Montageposition entgegen einer Federkraft in eine radial nicht hervorstehende Gebrauchsposition bewegbar ist und in ihrer Montageposition mit ihrem radial hervorstehenden freien Ende in eine zur Riegelachse parallele Rastnut des Verriegelungsgehäuses ragt.

Dazu kann in einfacher Weise die Federraste ein mit seinem einen Ende an dem Schließriegel fest angeordneter, radial freiragender Federarm sein, der in seiner entspannten Montageposition mit seinem anderen Ende radial von dem Schließriegel hervorsteht und durch axiale Kraftbeaufschlagung aus seiner radialen Montageposition in seine Gebrauchsposition auslenkbar ist, in der er sich um einen von 90° abweichenden Winkel zur Riegelachse geneigt erstreckt.

Ist dabei der Federarm von dem freien Ende des Schließzapfens des in seiner Einbaulage im Verriegelungsgehäuse befindlichen Schließzylinders in seine Gebrauchsposition ausgelenkt beaufschlagt, so erfolgt zwangsweise mit dem Einbau des Schließzylinders auch eine Auslenkung des Federarms.

Bildet die Rückenlehne eine Trennwand zwischen dem Fahrgastraum und einem Kofferraum des Kraftfahrzeugs, so ist bei in Gebrauchsstellung befindlicher Rückenlehne und verriegelter Verriegelungseinrichtung durch das Schloss diese Lehnenstellung abschließbar. Es ist dann nicht möglich, über den Fahrgastraum in den Kofferraum zu gelangen.

### Figuren und Ausführungsformen der Erfindung

Im Folgenden ist die Erfindung anhand von einem in den Zeichnungen dargestellten vorteilhaften Ausführungsbeispiel näher erläutert. Die Erfindung ist jedoch nicht auf dieses Ausführungsbeispiel beschränkt. Es zeigen:
- Figur 1: eine Seitenansicht einer Verriegelungseinrichtung mit einer Handhabe in Verriegelungsstellung und mit einem Schließriegel in Freigabestellung,
- Figur 2: eine Draufsicht der Verriegelungseinrichtung nach Figur 1,
- Figur 3: eine Schnittansicht entlang der Linie A - A in Figur 2,
- Figur 4: eine Seitenansicht der Verriegelungseinrichtung nach Figur 1 mit der Handhabe in Entriegelungsstellung und mit dem Schließriegel in Freigabestellung,
- Figur 5: eine Draufsicht der Verriegelungseinrichtung nach Figur 4,
- Figur 6: eine Schnittansicht entlang der Linie B - B in Figur 5,
- Figur 7: einen perspektivischen Ausschnitt im Bereich des Schließriegels der Verriegelungseinrichtung nach Figur 4,
- Figur 8: eine Seitenansicht der Verriegelungseinrichtung nach Figur 1 mit der Handhabe in Verriegelungsstellung und mit dem Schließriegel in Blockierstellung,
- Figur 9: eine Draufsicht der Verriegelungseinrichtung nach Figur 8,
- Figur 10: eine Schnittansicht entlang der Linie C - C in Figur 9,
- Figur 11: eine Schnittansicht entlang der Linie E - E in Figur 10,

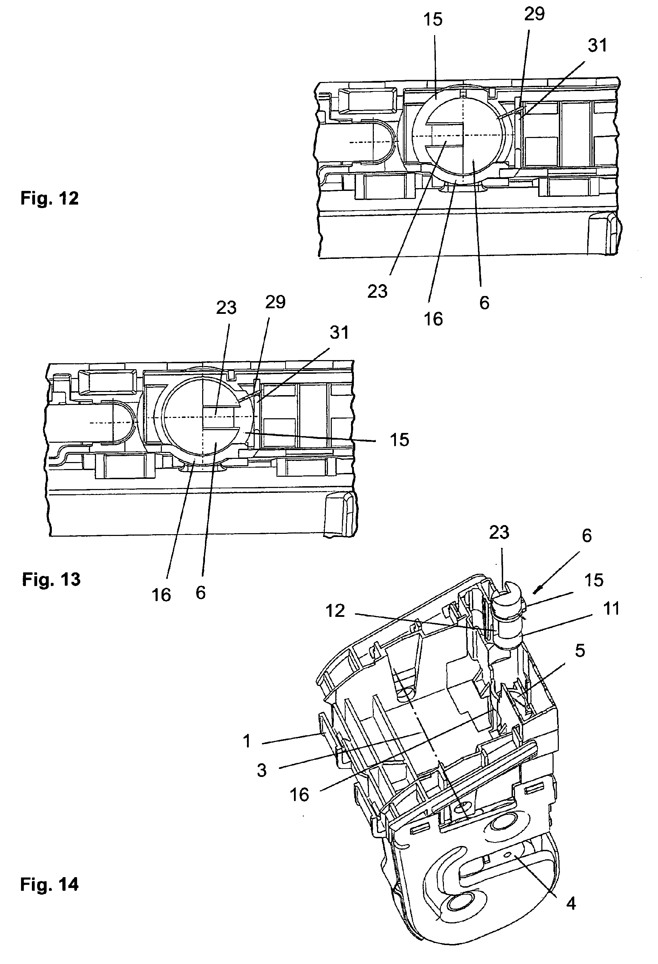

- Figur 12: eine Draufsicht auf den von einer Abdeckung befreiten Bereich des Schließriegels der Verriegelungseinrichtung nach Figur 1 in Freigabestellung,
- Figur 13: eine Draufsicht auf den von einer Abdeckung befreiten Bereich des Schließriegels der Verriegelungseinrichtung nach Figur 1 in Blockierstellung,
- Figur 14: eine perspektivische Ansicht des Gehäuses der Verriegelungseinrichtung nach Figur 1,

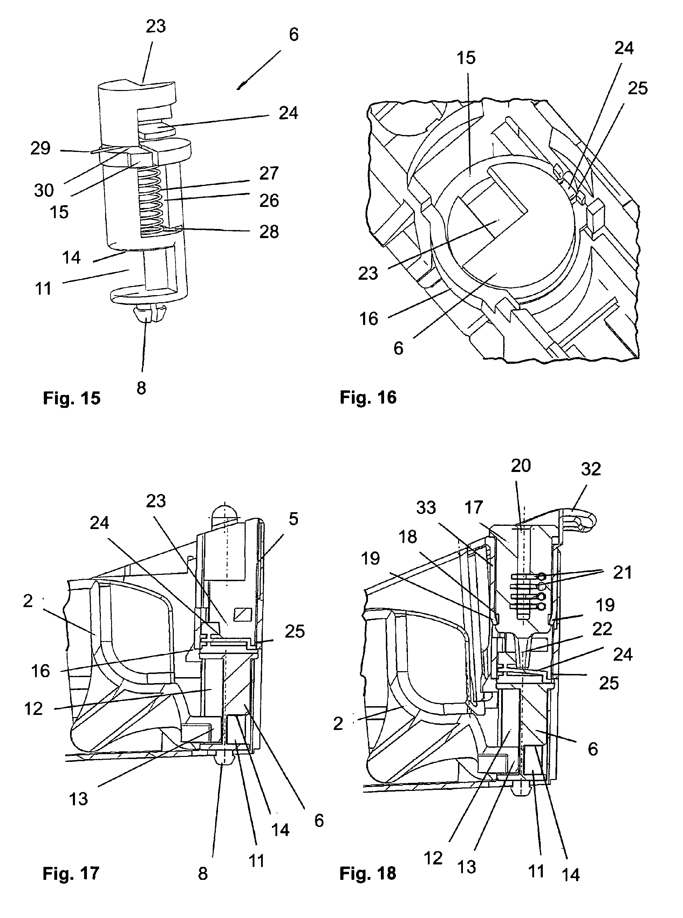

- Figur 15: eine perspektivische Ansicht des Schließriegels der Verriegelungseinrichtung nach Figur 1,
- Figur 16: eine perspektivische Draufsicht eines Ausschnitts der Verriegelungseinrichtung nach Figur 1 im Bereich des Schließriegels,
- Figur 17: eine Seitenansicht im Schnitt eines Ausschnitts der Verriegelungseinrichtung nach Figur 1 im Bereich von Handhabe und Schließriegel ohne Schließzylinder und
- Figur 18: die Seitenansicht nach Figur 17 mit Schließzylinder.

Die dargestellte Verriegelungseinrichtung ist an einer umklappbaren Rückenlehne eines Sitzes eines Kraftfahrzeugs angeordnet und weist ein Verriegelungsgehäuse 1 auf, auf dessen Oberseite eine Abdeckung 32 befestigt ist.

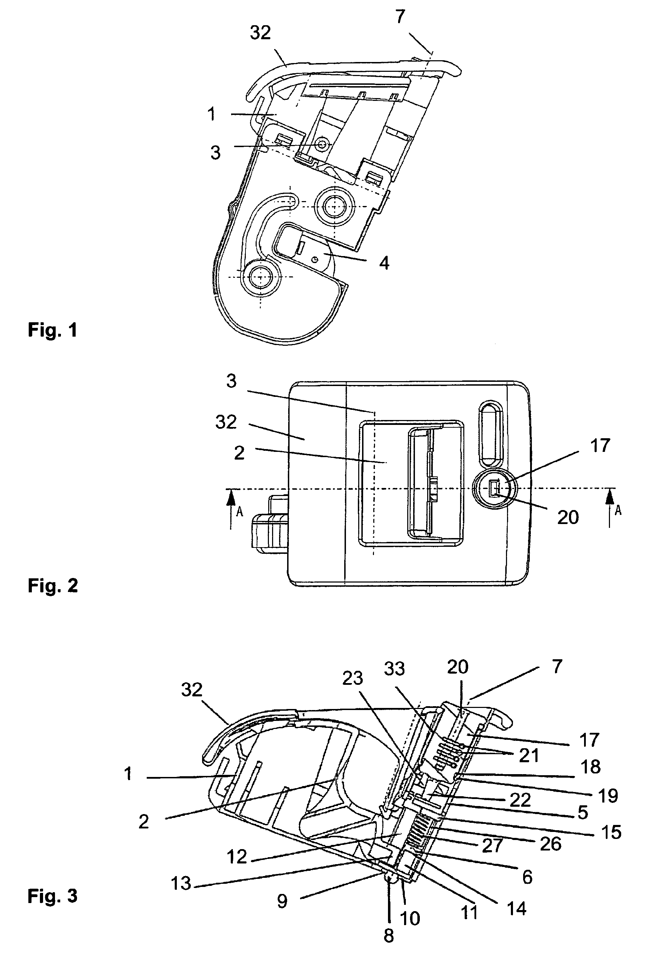

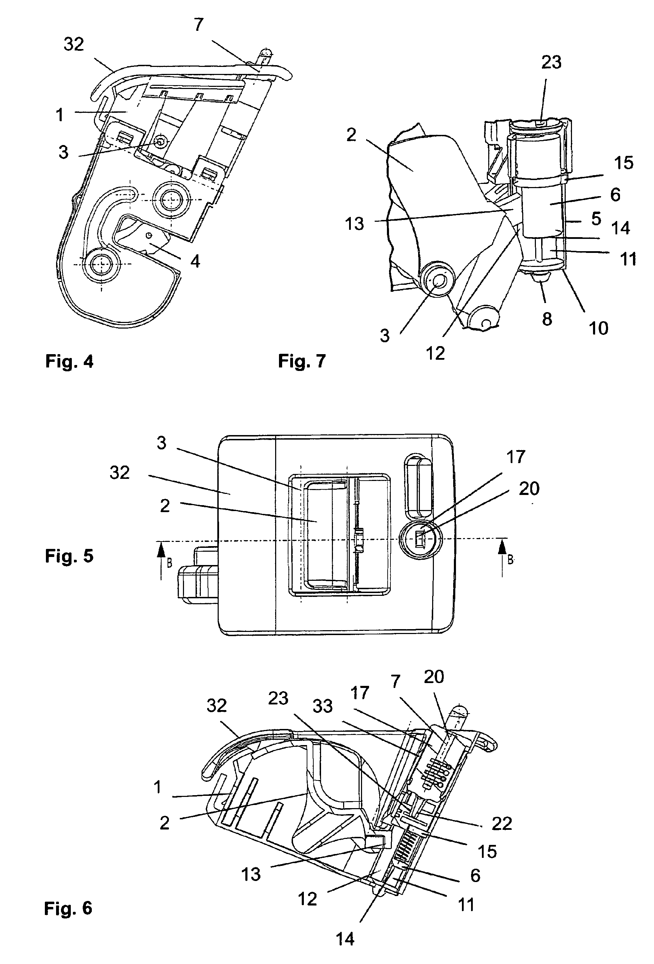

In dem Verriegelungsgehäuse 1 ist eine Handhabe 2 angeordnet, die um eine Schwenkachse 3 zwischen einer Verriegelungsstellung (Figuren 1 bis 3 sowie Figuren 8 bis 11) und einer Entriegelungsstellung (Figuren 4 bis 7) schwenkbar ist.

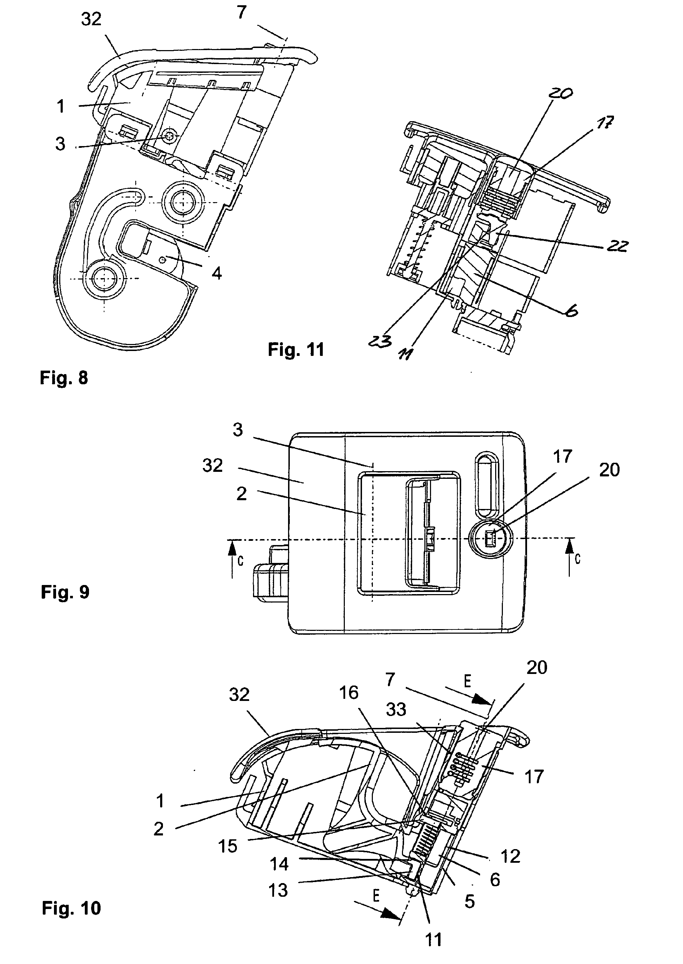

Durch die Handhabe 2 ist in bekannter Weise eine Sperrklinke 4 zwischen einer Sperrstellung (Figuren 1 und 8) und einer Entsperrstellung (Figur 4) bewegbar.

In einer Zylinderführung 5 des Verriegelungsgehäuses 1 ist weiterhin in einem Abstand zur Schwenkachse 3 ein Schließriegel 6 um eine sich quer zur Schwenkachse 3 erstreckende Riegelachse 7 schwenkbar gelagert.

Zur axialen Positionierung des Schließriegels 6 weist dieser an seinem unteren Ende einen Koaxialclips 8 auf, der in der Einbauposition des Schließriegels 6 in eine Bohrung 9 eines die Zylinderführung 5 an ihrem unteren Ende abschließenden Bodens 10 des Verriegelungsgehäuses 1 eingeclipst ist.

Der eine zylindrische Umlaufkontur aufweisende Schließriegel 6 weist in seinem unteren Endbereich eine um etwa 200° radial umlaufende Blockiernut 11 auf.

In das eine Ende der Blockiernut 11 mündet eine von dort aus axial nach oben sich erstreckende Freigabenut 12.

Der Schließriegel 6 ist zwischen einer Freigabestellung (Figuren 1 bis 7) und einer Blockierstellung (Figuren 8 bis 11) um die Riegelachse 7 schwenkbar.

Die Handhabe 2 weist einen radial zur Schwenkachse 3 hervorstehenden Blockierzapfen 13 auf, der je nach Stellung der Handhabe 2 in die Blockiernut 11 bzw. die Freigabenut 12 ragt.

In der Freigabestellung des Schließriegels 6 ist die Freigabenut 12 mit ihrer Nutöffnung der Handhabe 2 zugewandt und der Blockierzapfen 13 kann sich in der Freigabenut 12 in deren Längsrichtung frei bewegen.

Die Breite des Blockierzapfens 13 entspricht dabei der Breite der Freigabenut 12.

Durch die freie Bewegbarkeit des Blockierzapfens 13 in der sich quer zur Schwenkachse 3 erstreckenden Freigabenut 12 kann auch die Handhabe 2 frei zwischen ihrer Verriegelungsstellung und Entriegelungsstellung geschwenkt und so die Sperrklinke 4 zwischen ihrer Sperrstellung und Entsperrstellung bewegt werden.

Gleichzeitig lässt sich bei betätigter Handhabe der Schließriegel 6 nicht um seine Riegelachse 7 in seine Blockierstellung schwenken.

Die Erstreckung des Blockierzapfens 13 quer zur Schwenkachse 3 entspricht der Breite der Blockiernut 11.

In der Blockierstellung des Schließriegels 6 ist die Freigabenut 12 aus ihrer zur Handhabe 2 gerichteten Position herausgeschwenkt, so dass nur noch die Blockiernut 11 zur Handhabe 2 gerichtet ist.

Dazu musste zunächst die Handhabe 2 in ihre Verriegelungsstellung geschwenkt werden, wodurch der Blockierzapfen 13 in die Blockiernut 11 bewegt wird.

Durch das Schwenken des Schließriegels 6 in seine Blockierstellung ist der Blockierzapfen 13 zwischen den beiden Seitenwänden der Blockiernut 11 geführt, wobei die obere Seitenwand einen Blockieranschlag 14 bildet, an dem der Blockierzapfen 13 bei dem Versuch die Handhabe 2 aus ihrer Verriegelungsstellung in Richtung ihrer Entriegelungsstellung zu schwenken blockierend anschlägt und eine solche Schwenkbarkeit der Handhabe 2 verhindert.

Der Schließriegel 6 weist einen radial hervorstehenden Sicherungsansatz 15 auf, der etwa 180° radial umlaufend ausgebildet ist und in der Blockierstellung des Schließriegels 6 einen gehäusefesten Sicherungsanschlag 16 so hintergreift, dass eine von dem durch die Handhabe 2 in Entriegelungsstellung beaufschlagten Blockierzapfen 13 auf den Schließriegel 6 einwirkende Kraft über den Sicherungsansatz 15 an dem Sicherungsanschlag 16 abgestützt ist.

Auf dem dem Koaxialclips 8 entgegengesetzten Ende ist in eine zur Zylinderführung 5 koaxiale hülsenartige Schließzylinderführung 33 der Abdeckung 32 ein Schließzylinder 17 eingesetzt, der eine radial umlaufende Ringnut 18 aufweist, in die Clipsnasen 19 der Schließzylinderführung 33 einrasten und den Schließzylinder 17 axial in der Schließzylinderführung 33 sichern, aber ein Verdrehen um die Riegelachse 7 erlauben.

Der Schließzylinder 17 besitzt eine Schlüsselöffnung 20, in die von außen her ein Schlüssel einführbar ist. Durch den in die Schlüsselöffnung 20 eingeführten und in Freigaberichtung gedrehten Schlüssel werden Riegelansätze 21 des Schließzylinders 17 aus ihrer radial hervorstehenden und in Riegelöffnungen der Schließzylinderführung 33 eingreifenden Riegelstellung in den Schließzylinder 17 radial hineinbewegt und dann der Schließzylinder 17 um seine Längsachse, welche seine Drehachse darstellt, geschwenkt.

An seinem dem Schließriegel 6 zugewandten Ende weist der Schließzylinder 17 einen zur Drehachse des Schließzylinders 17 parallelen hervorstehenden Schließzapfen 22 auf, der in eine entsprechende Schließausnehmung 23 an der dem Schließzylinder 17 zugewandten Stirnseite des Schließriegels 6 eingreift.

Vorliegend fluchten die Drehachse des Schließzylinders 17 und die Riegelachse 7 miteinander. Es ist auch denkbar, dass die Drehachse des Schließzylinders 17 zur Riegelachse 7 parallel versetzt angeordnet ist oder einen Winkel mit dieser bildet.

Durch das Drehen des Schlüssels in Freigaberichtung wird über den Schließzylinder 17 auch der Schließriegel 6 aus seiner Blockierstellung in seine Freigabestellung geschwenkt.

Entsprechend erfolgt bei entgegengesetzter Drehrichtung des Schlüssels ein Schwenken des Schließriegels 6 aus der Freigabestellung in die Blockierstellung. Wird dann der Schlüssel wieder abgezogen, sind auch die Riegelansätze 21 wieder radial ausgefahren und greifen in die Riegelöffnungen der Schließzylinderführung 33 ein, so dass der Schließzylinder 17 drehgesichert ist.

Der Schließriegel 6 weist einen mit seinem einen Ende an dem Schließriegel 6 fest angeordneten, radial freiragenden Federarm 24 auf, der in seiner entspannten Montageposition mit seinem anderen Ende radial aus der Umlaufkontur des Schließriegels 6 hervorsteht und bei noch nicht montiertem Schließzylinder 17 aber bereits montiertem Schließriegel 6 in eine zur Riegelachse 7 parallele Rastnut 25 an der Wandung der Zylinderführung 5 hineinragt und so für die korrekte Einbaulage des Schließriegels 6 sorgt.

Wird nun auch noch der Schließzylinder 17 montiert, so lenkt das freie Ende des Schließzapfens 22, das auf den Federarm 24 drückt, diesen derart aus, dass sein freies Ende nicht mehr in die Rastnut 25 hineinragt. Damit ist der Sperrriegel 6 nun auch um die Riegelachse 7 schwenkbar.

In dem Schließriegel 6 ist koaxial eine Federkammer 26 ausgebildet, in der eine als Wendelfeder 27 ausgebildete, vorgespannte Drehfeder angeordnet ist.

Das eine radial gerichtete Ende 28 der Wendelfeder 27 stützt sich an dem Schließriegel 6 ab, während das andere Ende 29 der Wendelfeder 27 durch einen teilumlaufenden Schlitz 30 radial aus dem Schließriegel 6 herausragt und an einem Anschlag 31 des Verriegelungsgehäuses 1 abgestützt ist.

Durch die Vorspannung der Wendelfeder 27 ist der Schließriegel 6 immer in seine Freigabestellung vorgespannt.

Bei einem Drehen von Schließzylinder 17 und Schließriegel 6 in die Blockierstellung mittels des Schlüssels muss immer auch die Kraft der Wendelfeder 27 überwunden werden, während bei einem Drehen in die Freigabestellung die Federkraft unterstützt.

Sowohl die Wendelfeder 27 als auch der noch in der Rastnut 25 befindliche Federarm 24 gewährleisten, dass während der Montage der Verriegelungseinrichtung beim Einbau des Schließriegels 6 und des Schließzylinders 17 der Schließriegel 6 sich immer definiert in der Freigabestellung befindet, so dass keine Kollision mit dem Blockierzapfen 13 möglich ist.

Bei Vorhandensein der Wendelfeder 27 kann auf die Montagesicherung durch den Federarm 24 verzichtet werden.

Weiterhin wird durch die Wendelfeder 27 sichergestellt, dass bei nachträglicher Entfernung des Schließglieds 6 die Handhabe 2 immer geschwenkt werden kann.

### Bezugszeichenliste

- 1: Verriegelungsgehäuse
- 2: Handhabe
- 3: Schwenkachse
- 4: Sperrklinke
- 5: Zylinderführung
- 6: Schließriegel
- 7: Riegelachse
- 8: Koaxialclips
- 9: Bohrung
- 10: Boden
- 11: Blockiernut
- 12: Freigabenut
- 13: Blockierzapfen
- 14: Blockieranschlag
- 15: Sicherungsansatz
- 16: Sicherungsanschlag
- 17: Schließzylinder
- 18: Ringnut
- 19: Clipsnasen
- 20: Schlüsselöffnung
- 21: Riegelansätze
- 22: Schließzapfen
- 23: Schließausnehmung
- 24: Federarm
- 25: Rastnut
- 26: Federkammer
- 27: Wendelfeder
- 28: erstes Ende der Wendelfeder
- 29: zweites Ende der Wendelfeder
- 30: Schlitz
- 31: Anschlag
- 32: Abdeckung
- 33: Schließzylinderführung

## Patentansprüche

1. Verriegelungseinrichtung einer umklappbaren Rückenlehne eines Sitzes, insbesondere eines Fondsitzes in einem Kraftfahrzeug,
mit einem Verriegelungsgehäuse (1), in dem eine um eine Schwenkachse (3) zwischen einer Verriegelungsstellung und einer Entriegelungsstellung schwenkbare Handhabe (2) angeordnet ist, durch die eine Sperrklinke (4) zwischen einer Sperrstellung und einer Entsperrstellung mitnehmbar ist,
mit einem Blockierelement, das durch ein abschließbares Schloss manuell zwischen einer die Handhabe (2) in ihrer Verriegelungsstellung blockierenden Blockierstellung und einer die Handhabe (2) freigebenden Freigabestellung bewegbar ist, **dadurch gekennzeichnet, dass**
das Blockierelement ein in dem Verriegelungsgehäuse (1) um eine Riegelachse (7) zwischen der Blockierstellung und der Freigabestellung schwenkbar gelagerter Schließriegel (6) ist, der eine Freigabeausnehmung und eine Blockierausnehmung aufweist, und dass
die Handhabe (2) einen Blockierzapfen (13) aufweist, der in der Freigabestellung des Schließriegels (6) in die Freigabeausnehmung ragt und durch ein Verschwenken der Handhabe (2) zwischen der Verriegelungsstellung und der Entriegelungsstellung in der Freigabeausnehmung frei bewegbar ist, und der in der Blockierstellung des Schließriegels (6) sowie der Verriegelungsstellung der Handhabe (2) in die Blockierausnehmung ragt und gegen Verschwenken in die Entriegelungsstellung blockiert ist.

2. Verriegelungseinrichtung nach Anspruch 1, **dadurch gekennzeichnet, dass** sich die Riegelachse (7) quer zur Schwenkachse (3) der Handhabe (2) erstreckt.

3. Verriegelungseinrichtung nach Anspruch 2, **dadurch gekennzeichnet, dass** der gegen axiales Verschieben gesicherte Schließriegel (6) eine sich parallel zur Riegelachse (7) erstreckende, die Freigabeausnehmung bildende Freigabenut (12) aufweist, die in der Freigabestellung des Schließriegels (6) der Handhabe (2) zugewandt ist und in die der Blockierzapfen (13) ragt, wobei ein Ende der Freigabenut (12) in eine zumindest teilweise radial umlaufende, die Blockierausnehmung bildende Blockiernut (11) mündet, deren eine Seitenwand einen Blockieranschlag (14) bildet, an den der Blockierzapfen (13) eine Bewegung der Handhabe (2) aus der Verriegelungsstellung in die Entriegelungsstellung blockierend anschlagbar ist.

4. Verriegelungseinrichtung nach Anspruch 3, **dadurch gekennzeichnet, dass** der Schließriegel (6) einen radial hervorstehenden Sicherungsansatz (15) aufweist, der in der Blockierstellung des Schließriegels (6) an zumindest einem gehäusefesten Sicherungsanschlag (16) axial zur Riegelachse (7) eine von dem durch die Handhabe (2) in Entriegelungsstellung beaufschlagten Blockierzapfen (13) auf den Schließriegel (6) einwirkende Kraft abstützend in Anlage ist.

5. Verriegelungseinrichtung nach einem der vorhergehenden Ansprüche, **dadurch gekennzeichnet, dass** der Schließriegel (6) durch einen schlüsselbetätigbaren Schließzylinder (17) zwischen der Freigabestellung und der Blockierstellung schwenkbar antreibbar ist.

6. Verriegelungseinrichtung nach einem der vorhergehenden Ansprüche, **dadurch gekennzeichnet, dass** der Schließriegel (6) durch eine vorgespannte Feder in seine Freigabestellung federbeaufschlagt ist.

7. Verriegelungseinrichtung nach einem der vorhergehenden Ansprüche, **dadurch gekennzeichnet, dass** der Schließriegel (6) eine Federraste aufweist, die aus einer radial von dem Schließriegel (6) hervorstehenden Montageposition entgegen einer Federkraft in eine radial nicht hervorstehende Gebrauchsposition bewegbar ist und in ihrer Montageposition mit ihrem radial hervorstehenden freien Ende in eine zur Riegelachse (7) parallele Rastnut (25) des Verriegelungsgehäuses (1) ragt.

8. Verriegelungseinrichtung nach Anspruch 7, **dadurch gekennzeichnet, dass** die Federraste ein mit seinem einen Ende an dem Schließriegel (6) fest angeordneter, radial freiragender Federarm (24) ist, der in seiner entspannten Montageposition mit seinem anderen Ende radial von dem Schließriegel (6) hervorsteht und durch axiale Kraftbeaufschlagung aus seiner radialen Montageposition in seine Gebrauchsposition auslenkbar ist, in der er sich um einen von 90° abweichenden Winkel zur Riegelachse (7) geneigt erstreckt.

9. Verriegelungseinrichtung nach Anspruch 5 und nach Anspruch 8, **dadurch gekennzeichnet, dass** der Schließzylinder (17) einen zu der Drehachse des Schließzylinders (17) parallel hervorstehenden Schließzapfen (22) aufweist, der in eine entsprechende Schließausnehmung (23) an der dem Schließzylinder (17) zugewandten Stirnseite des Schließriegels (6) eingreift, und dass der Federarm (24) von dem freien Ende des Schließzapfens (22) des in seiner Einbaulage im Verriegelungsgehäuse (1) befindlichen Schließzylinders (17) in seine Gebrauchsposition ausgelenkt beaufschlagt ist.

10. Verriegelungseinrichtung nach einem der vorhergehenden Ansprüche, **dadurch gekennzeichnet, dass** die Rückenlehne eine Trennwand zwischen einem Fahrgastraum und einem Kofferraum des Kraftfahrzeugs bildet.

## Claims

1. Locking device for a foldable backrest of a seat, in particular a rear seat in a motor vehicle,
having a locking housing (1) in which there is arranged a handle (2) which can be pivoted about a pivot axis (3) between a locking position and an unlocking position and by means of which a locking detent (4) can be carried between a locking position and an unlocking position,
having a blocking element which can be moved by means of a closable lock manually between a blocking position which blocks the handle (2) in the locking position thereof and a release position which releases the handle (2), **characterized in that**
the blocking element is a closure bar (6) which is supported in the locking housing (1) so as to be able to be pivoted about a bar axis (7) between the blocking position and the release position and which has a release recess and a blocking recess and **in that** the handle (2) has a blocking pin (13) which, in the release position of the closure bar (6), protrudes into the release recess and can be freely moved in the release recess by the handle (2) being pivoted between the locking position and the unlocking position, and which, in the blocking position of the closure bar (6) and the locking position of the handle (2), protrudes into the blocking recess and is blocked against pivoting into the unlocking position.

2. Locking device according to Claim 1, **characterized in that** the bar axis (7) extends transversely relative to the pivot axis (3) of the handle (2).

3. Locking device according to Claim 2, **characterized in that** the closure bar (6) which is secured against axial displacement has a release groove (12) which extends parallel with the bar axis (7), which forms the release recess and which in the release position of the closure bar (6) faces the handle (2) and into which the blocking pin (13) protrudes, an end of the release groove (12) opening in an at least partially radially peripheral blocking groove (11) which forms the blocking recess and one side wall of which forms a blocking stop (14) which the blocking pin (13) can abut so as to block a movement of the handle (2) from the locking position into the unlocking position.

4. Locking device according to Claim 3, **characterized in that** the closure bar (6) has a radially protruding securing attachment (15) which, when the closure bar (6) is in the blocking position, is in abutment axially relative to the bar axis (7) with at least one securing stop (16) which is secured to the housing so as to support a force which is applied to the closure bar (6) by the blocking pin (13) which is acted on by the handle (2) in the unlocking position.

5. Locking device according to one of the preceding claims, **characterized in that** the closure bar (6) can be pivotably driven by means of a key-actuatable closure cylinder (17) between the release position and the blocking position.

6. Locking device according to one of the preceding claims, **characterized in that** the closure bar (6) is resiliently loaded into the release position thereof by means of a pretensioned spring.

7. Locking device according to one of the preceding claims, **characterized in that** the closure bar (6) has a spring catch which can be moved from an assembly position protruding radially from the closure bar (6) counter to a resilient force into a radially non-protruding position for use and which, in the assembly position thereof, protrudes with the radially protruding free end thereof into a catch groove (25) of the locking housing (1) that is parallel with the bar axis (7).

8. Locking device according to Claim 7, **characterized in that** the spring catch is a resilient arm (24) which is fixedly arranged with one end thereof on the closure bar (6), which protrudes freely in a radial manner and which in the relaxed assembly position thereof protrudes radially from the closure bar (6) with the other end thereof and can be redirected by means of application of axial force from the radial assembly position into the position for use thereof, in which it extends in a manner inclined relative to the bar axis (7) through an angle which differs from 90°.

9. Locking device according to Claim 5 and Claim 8, **characterized in that** the closure cylinder (17) has a closure pin (22) which protrudes parallel with the rotation axis of the closure cylinder (17), and which engages in a corresponding closure recess (23) at the end face of the closure bar (6) facing the closure cylinder (17), and **in that** the resilient arm (24) is acted on by the free end of the closure pin (22) of the closure cylinder (17) which is located in its assembly position in the locking housing (1) so as to be deflected into the position for use thereof.

10. Locking device according to one of the preceding claims, **characterized in that** the backrest forms a partition wall between a passenger space and a luggage space of the motor vehicle.

## Revendications

1. Dispositif de verrouillage d'un dossier rabattable d'un siège, en particulier d'un siège arrière dans un véhicule automobile,
comprenant un boîtier de verrouillage (1) dans lequel est disposée une manette (2) pouvant pivoter autour d'un axe de pivotement (3) entre une position de verrouillage et une position de déverrouillage, au moyen de laquelle manette un cliquet de blocage (4) peut être entraîné entre une position de blocage et une position de déblocage,
comprenant un élément de blocage qui peut être déplacé manuellement, par un verrou pouvant être fermé, entre une position de blocage bloquant la manette (2) dans sa position de verrouillage et une position de libération libérant la manette (2), **caractérisé en ce que**
l'élément de blocage est un pêne de fermeture (6) monté dans le boîtier de verrouillage (1) de manière à pouvoir pivoter autour d'un axe de pêne (7) entre la position de blocage et la position de libération, lequel pêne de fermeture comprend un évidement de libération et un évidement de blocage, et **en ce que**
la manette (2) comprend une goupille de blocage (13) qui fait saillie dans l'évidement de libération dans la position de libération du pêne de fermeture (6) et peut être déplacée librement dans l'évidement de libération par un pivotement de la manette (2) entre la position de verrouillage et la position de déverrouillage, et qui, dans la position de blocage du pêne de fermeture (6) ainsi que dans la position de verrouillage de la manette (2), fait saillie dans l'évidement de blocage et est bloquée de manière à empêcher un pivotement dans la position de déverrouillage.

2. Dispositif de verrouillage selon la revendication 1, **caractérisé en ce que** l'axe de pêne (7) s'étend transversalement à l'axe de pivotement (3) de la manette (2).

3. Dispositif de verrouillage selon la revendication 2, **caractérisé en ce que** le pêne de fermeture (6) bloqué de manière à empêcher un déplacement axial comprend une rainure de libération (12) s'étendant parallèlement à l'axe de pêne (7) et formant l'évidement de libération, laquelle rainure de libération est, dans la position de libération du pêne de fermeture (6), tournée vers la manette (2) et dans laquelle rainure de libération fait saillie la goupille de blocage (13), une extrémité de la rainure de libération (12) débouchant dans une rainure de blocage (11) au moins partiellement radialement périphérique et formant l'évidement de blocage, dont une paroi latérale forme une butée de blocage (14) contre laquelle peut être mise en butée la goupille de blocage (13) en bloquant un déplacement de la manette (2) à partir de la position de verrouillage jusqu'à la position de déverrouillage.

4. Dispositif de verrouillage selon la revendication 3, **caractérisé en ce que** le pêne de fermeture (6) comprend un épaulement de fixation (15) faisant saillie radialement qui, dans la position de blocage du pêne de fermeture (6), est en appui contre au moins une butée de fixation (16) solidaire du boîtier axialement par rapport à l'axe de pêne (7) en supportant une force agissant sur le pêne de fermeture (6) par la goupille de blocage (13) sollicitée dans la position de déverrouillage par la manette (2).

5. Dispositif de verrouillage selon l'une quelconque des revendications précédentes, **caractérisé en ce que** le pêne de fermeture (6) peut être entraîné de manière pivotante entre la position de libération et la position de blocage par un cylindre de fermeture (17) pouvant être actionné par une clé.

6. Dispositif de verrouillage selon l'une quelconque des revendications précédentes, **caractérisé en ce que** le pêne de fermeture (6) est sollicité par ressort dans sa position de libération par un ressort précontraint.

7. Dispositif de verrouillage selon l'une quelconque des revendications précédentes, **caractérisé en ce que** le pêne de fermeture (6) comprend un cliquet élastique qui peut être déplacé à partir d'une position de montage faisant saillie radialement à partir du pêne de fermeture (6), à l'encontre d'une force de ressort, jusqu'à une position d'utilisation ne faisant pas saillie radialement, et qui, dans sa position de montage, fait saillie par son extrémité faisant saillie radialement dans une rainure d'encliquetage (25), parallèle à l'axe de pêne (7), du boîtier de verrouillage (1).

8. Dispositif de verrouillage selon la revendication 7, **caractérisé en ce que** le cliquet élastique est un bras élastique (24) faisant saillie librement radialement et disposé fixement par son extrémité sur le pêne de fermeture (6), lequel bras élastique, dans sa position de montage détendue, fait saillie par son autre extrémité radialement à partir du pêne de fermeture (6) et peut être dévié par une sollicitation de force axiale à partir de sa position de montage radiale jusqu'à sa position d'utilisation dans laquelle il s'étend de manière inclinée suivant un angle différent de 90° par rapport à l'axe de pêne (7).

9. Dispositif de verrouillage selon la revendication 5 et selon la revendication 8, **caractérisé en ce que** le cylindre de fermeture (17) comprend une goupille de fermeture (22) faisant saillie parallèlement à l'axe de rotation du cylindre de fermeture (17), laquelle goupille de fermeture vient en prise dans un évidement de fermeture (23) correspondant sur le côté frontal du pêne de fermeture (6) tourné vers le cylindre de fermeture (17), et **en ce que** le bras élastique (24) est sollicité de manière déviée dans sa position d'utilisation par l'extrémité libre de la goupille de fermeture (22) du cylindre de fermeture (17) se trouvant dans le boîtier de verrouillage (1) dans sa position d'installation.

10. Dispositif de verrouillage selon l'une quelconque des revendications précédentes, **caractérisé en ce que** le dossier forme une paroi de séparation entre un habitacle et un coffre à bagages du véhicule automobile.
